# EUROPEAN PATENT SPECIFICATION

(11) **EP 3 749 932 B1**
(45) Date of publication and mention of the grant of the patent: **20.12.2023**
(21) Application number: 19704408.4
(22) Date of filing: 30.01.2019
(51) Int. Cl.: G01F 23/263, G01F 11/28, G01F 22/00

(54) **CHEMICAL DOSING SYSTEM**
CHEMISCHES DOSIERSYSTEM
SYSTÈME DE DOSAGE CHIMIQUE

(30) Priority: 07.02.2018 GB 201801951
(43) Date of publication of application: 16.12.2020
(73) Proprietor: Selden Research Ltd, Buxton, Derbyshire SK17 9RZ (GB)
(72) Inventor: WOODHEAD, Peter, Buxton, Derbyshire SK17 9RZ (GB); WOODHEAD, Mark, Buxton, Derbyshire SK17 9RZ (GB); HOLLAND, Terry, Buxton, Derbyshire SK17 9RZ (GB)
(74) Representative: Dolleymores
(86) International application number: PCT/GB2019/050263
(87) International publication number: WO 2019/155187

(56) References cited:
- EP-A2- 0 036 307
- EP-A2- 0 763 723
- EP-A2- 3 026 404
- WO-A2-2005/025726

## Description

The present invention relates to a chemical dosing system and particularly, but not exclusively, to a chemical dosing system which may typically be used to dispense a volume of chemical concentrate into a volume of water or other diluent, to provide an appropriate concentration of cleaning chemical. This may for example be provided into a spray trigger bottle, a bucket or some other form of container ready for application.

With continued reference to the dispensing or dosing of chemicals in the cleaning industry, (although the present invention is not limited to such an application), it is normally necessary to transport chemicals in a concentrated form in order to avoid excessive transportation costs, to reduce the storage space that would otherwise be required and to significantly reduce the bulk of material to be manhandled. Once transported and stored as a concentrate, when required the chemical can then be diluted, on site, with water to the large volumes required to permit uniform dispersal for disinfecting purposes, or to permit dirt and grease to be dissolved in relatively large volumes of a cleaning fluid, for subsequent removal and disposal with that fluid.

Two very common types of containers that are used with cleaning chemicals are trigger spray bottles and buckets and there are two principle methods, used in the cleaning industry, for dispensing and diluting (dosing) concentrated cleaning chemicals into these and other types of containers. The first of these dispensing methods uses a dispensing station which adds a chemical directly into a stream of water as the resultant product is drawn from the dispensing station. The concentrated chemical is added to water, normally by means of a Venturi device, as water is drawn through the dispensing station to fill a container.

A major advantage of the Venturi based dosing system is that it does not require the user to measure the quantity of chemical, but instead simply requires them to dispense the volume of cleaning fluid they desire, which cleaning fluid should automatically contain the right quantity of chemical. This also has the advantage that the user may fill a small container, such as a trigger bottle, or a large bucket and the chemical concentration should be correct. It also offers the advantage of permitting the user to dispense just the quantity of cleaning fluid that they desire, for example a quarter of a bucket if they simply have a small room to clean or it is towards an end of a shift.

Disadvantages of Venturi dosing systems are that they need to be connected to a water supply and normally a mains water supply with at least two bar of pressure. However, because of the nature of the cleaning industry, dosing systems are typically located in back of house areas and if a water supply is present in such a location, then it is often there to supply a large appliance, for example a dishwasher or washing machine. Such an appliance will quite commonly be at the end of a dedicated spur and it is thus not uncommon for Venturi dosing systems connected to such a spur to incorrectly dose, due to insufficient water pressure whilst an adjacent appliance is drawing water from the same supply.

In addition to the above, the quantity of chemical concentrate drawn by the Venturi will depend on the viscosity of that chemical concentrate, which may vary significantly with temperature. This causes further problems when trying to dispense accurately with such systems, for it is not always possible to control the temperature at which the chemicals are stored and the range of temperatures experienced can vary widely. For example the same chemical concentrate could be stored outside in a cold climate or it could equally be stored in an excessively warm laundry room or boiler house, for this is normally out of the control of the supplier of the chemicals.

The above mentioned problems mean that it is normally relatively expensive to install a Venturi based system, particularly if a facility has to be established where the chemicals can be reliably stored at a desired temperature and if a dedicated water supply needs to first be installed. There are also further inherent disadvantages of Venturi systems, in that they normally require the services of a plumber to install them (even if a suitable water supply is already present), a plumber who in turn will need to ensure they comply with local legislation relating to the prevention of backflow of chemicals into the water supply. Also, as with any device connected to a pressurised water supply, there is always the risk of failure of a component and the risk and liability associated with a potential leak and subsequent flooding.

The second of the dispensing methods, an alternative to the Venturi type dosing system described above, is the fixed dose system. This may be in the form of an optic type system, where a small reservoir (optic) is built into a bottle or cap of a container for chemical concentrate, such that a volume of chemical concentrate in the bottle can be dispensed into the optic and therefore be measured in the optic prior to being dispensed into an appropriate volume of diluent, such as water. Major advantages of such a system are that there is no installation cost involved and there is no risk of leakage or contamination of the water supply. A user simply fills a bucket, or some other type of container with water prior to dispensing the chemical concentrate into that water. However the user is exposed directly to the chemical concentrate.

Fixed dose systems also have other significant disadvantages. First, with an optic based system, the quantity dispensed from the optic will often depend on the viscosity of the chemical concentrate, which will influence the residual amount that is retained in the optic. This residual amount will also depend on the patience the user has when letting it drain from the optic, which may vary depending on whether they are dispensing a single measure or many multiple measures in succession.

The system not only depends on the accuracy with which the user fills and drains the optic, but it also relies on the user measuring out the correct volume of water (diluent). As this volume is far greater it is more difficult to reliably measure and will often be determined by the size of the container from which the resultant product will be used, for example a bucket, and when a user considers such a container to be full. Stipulating that a measured volume of a concentrate be added to five litres of water may commonly result in that measured quantity being added to anywhere between 3 and 7 litres, whereby the three litres will be at more than double the concentration of the 7 litres. This is not only potentially wasteful, but more importantly this can result in unsatisfactory sterilisation of a surface or result in excessive residues leading to stickiness, the tainting of food or unpleasant odours.

Other types of fixed dose systems use manual or electronically driven pumps. A typical manual pump would be the pelican pump, where a user operates the pump and whereby a full stroke delivers a predetermined quantity of the chemical concentrate irrespective of the viscosity of that chemical. Alternatively, many types of electric type pumps, typically diaphragm pumps, exist, where the pump is operated for a predetermined period of time resulting in a predetermined quantity of the chemical being dispensed, again irrespective of the viscosity of that chemical concentrate. The advantage of these systems is that they are relatively inexpensive to install and they provide a uniform dose irrespective of the user. However, they still rely on a user to ensure that the correct quantity of diluent is in the container into which the chemical concentrate is to be dispensed. There is also the problem that because a predetermined dose is dispensed into a container, it is not normally possible to dispense a smaller quantity of chemical, for example in the case where a user may be at the end of their shift or only has a single small task to perform.

WO2005/025726A2 discloses a system for accurately dispensing and mixing at least two liquid components for use in medical procedures.

It is an object of the present invention to provide an improved dosing system that addresses some of the above issues.

According to the first aspect of the present invention there is provided a chemical dosing system as claimed in claim 1.

A chemical dosing system may comprise a pump which can accurately dispense a desired volume of concentrate or, alternatively, the quantity dispensed may be controlled by metering the quantity dispensed and terminating the dispensing once a desired volume has been dispensed.

A chemical dosing system in accordance with the present invention provides a system which may accurately dose a chemical concentrate into a diluent, without the need for a pressurised water supply. The provision of the level detector makes it possible to correctly dispense the correct volume of concentrate into any volume of diluent, avoiding the risk of a user dispensing a predetermined quantity of chemical concentrate into an incorrect volume of diluent, as may occur with known fixed dose type systems. Thus, with the present invention a user may, for example, fill a bucket with water to any appropriate level for a particular task, or to a level that they may comfortably carry, with the level detector then causing an appropriate volume of concentrate to be dispensed into the bucket.

One significant advantage of the present invention is that it avoids the need to accurately measure or dispense a large volume of diluent. The diluent, such as water, may instead be added to a container directly from a tap, for example, without the volume having to be measured. The final volume can then be rapidly and easily approximated by detecting the level of diluent. Because of the normally relatively large volume of diluent, compared to the volume of concentrate, it is not necessary to accurately determine the volume of diluent, thus only the volume of concentrate need be accurately dispensed and only a relatively small pump or meter is required to achieve this. This may enables the dispensing equipment to be particularly compact and to use relatively little power.

The detector comprises a plurality of vertically displaced sensors, each sensor arranged to detect diluent at a different level within the container. The plurality of sensors may be a plurality of contactless sensors, the output of each of which is altered by detecting a property of the diluent being in close proximity to the sensor, for in this way the sensors may be arranged to be outside of the container, so as not to come into contact with either the diluent or chemical concentrate. Such sensors may detect a change in the optical characteristics of the container when the level of diluent reaches a point in the container level with the sensor, or it may detect changes in the reflectance of other electromagnetic radiation, such as radar, or changes in the reflectance of sound waves, such as sonar. Preferably, when the diluent is a conductive liquid such as water, the sensor will detect changes in the conductivity of the container when filled with diluent above the level of the sensor. This may then enable a user to place a container, with an appropriate but unknown quantity of diluent in it, adjacent to the detector to enable the chemical dosing system to determine the quantity of diluent within the container and dispense an appropriate amount of chemical concentrate. Advantageously, the processor may require the lowermost sensor to indicate the presence of the diluent, thus preventing dispensing if the container is incorrectly placed relative to detector.

As mentioned above, it is not normally necessary to accurately determine the level of diluent, so incremental detection of the level is sufficient and enables the above types of level detectors to be used. These offer significant advantages over systems which use an accurate weigh scale to determine both the volume of diluent and concentrate, for it avoids the need to regularly service the equipment in order to periodically re-calibrate the weigh scale.

The dosing system comprises a receptacle for receiving the container and maintaining it in a position adjacent to the detector, which detector is arranged to detect the level of diluent in the container through the wall of the container. The receptacle may advantageously comprise means for determining a diameter of the container, as this may permit the dosing system to be used with a non-specific cylindrical container. The means for determining the diameter of the container, together with the detector determining the level of the diluent in the container, permits the processor to determine the volume of diluent in the container.

The means for determining the diameter may comprise a cone shaped portion, or cone shaped elements, arranged to receive a cylindrical base of the container, with a position sensor arranged to generate a signal indicative of the position at which the base of the container rests within the cone shaped portion, or cone shaped elements, which will thus indicate the diameter of the container.

In an embodiment not according to the claimed invention, the receptacle may instead include a pair of callipers, or an equivalent device, for generating a signal indicative of the diameter of the container.

A known type of container is provided to the user for use with the chemical dosing system, avoiding the need to determine the diameter of the container.

The container has a specific non-standard shape, with the receptacle then shaped to permit the container to be accommodated in the receptacle. The detector has a plurality of sensors for detecting the level of diluent in the container, with some of the sensors of the detector positioned such that if a container of the wrong type, full or partly full of diluent, were to be placed in the receptacle, then a lowermost sensor or sensors would fail to detect the presence of the diluent and would prevent chemical concentrate from being dispensed. In this manner the dosing system can be arranged to only dispense chemical concentrate into a specific type of container, where the levels indicated by the sensors are known to correspond to predetermined volumes of diluent within the container. A tag may be provided on the container and an appropriate reader provided for reading information on the tag and transmitting this to the processor, with the information on the tag being indicative of a desired concentration of solution for that container. The tag may be a radio frequency identification device (RFID) tag or could be a barcode or similar device. An advantage of this is that, in addition to ensuring the dosing system can be arranged to only dispense chemical concentrate into a specific type of container, the dosing system can also ensure that only the correct chemical is dosed into the container at locations which are installed with a number of dosing systems dispensing a number of differing products.

Preferably, the tag may be embedded with information regarding the dosage of the chemical required. This may enable the same chemical concentrate and dosing system to be used for a number of different applications, simply by altering the dosage to the required concentration. This may be advantageous if a resultant product is to be used in a refrigerated area, where it may be necessary to increase the concentration for routine disinfection in such a refrigerated area, or the product is required to decontaminate part of a building after a specific outbreak of a bacterial, viral, or other threat, whereby it may be necessary to increase the strength of the product to disinfect a more resistant pathogen after such an outbreak. In these cases the site using the product may, for example, have access to a number of trigger spray containers and simply select the desired container for the chosen application and the dosing device will dispense the correct concentration of chemical for the chosen application.

Not according to the present invention, where chemical concentrate is to be dispensed into an open topped container, such as a bucket, the detector may comprise an array of vertically displaced sensors on a wand, with the wand being arranged to be stood upright in the container and with each sensor arranged to detect the presence of diluent at a different level within the container. An advantage of this arrangement is that there is no requirement for a mounted detector, for example one which may be mounted on a wall adjacent to a work surface or floor, but instead the wand may be free standing and simply be placed in a container when that container is placed below an outlet of the dosing system. This may prevent damage which may otherwise occur to a fixed detector, as a result of large and heavy buckets or the like being swung into position adjacent to the detector.

In an embodiment not according to the invention, the chemical dosing system may comprise a plurality of containers and a plurality of detectors, each detector housed in or on a respective associated container, with each detector advantageously arranged to wirelessly communicate with the processor. This enables a detector to be specific to a container and this may then provide a signal to the processor that indicates the volume of diluent in the container, without the need to determine either the diameter of the container or the container type, separately from the information provided by the detector.

The dispensing mechanism may comprise a pump such as a positive displacement pump which may run for a period of time determined by the processor, in independence of the signals received from the detector. Alternatively, the chemical concentrate could be supplied from a pressurised source, possibly acting under gravity, with the quantity dispensed being metered until an appropriate volume, as determined by the processor, has been dispensed into the container.

The chemical concentrate may also be provided with a tag, which may utilise the same technology or different technology to any tag provided on the container. The information on the tag may preferably be indicative of the product type that is to be dispensed into the container. Preferably, the tag may also be embedded with information regarding the dosage of the chemical concentrate. This may be advantageous if it is necessary to change the concentration of a product after the installation of the dosing system. Such changes may be necessary in order to respond to a change in product formulation, a change in legislative requirements or the emergence of a new pathogen which requires a different concentration of product to effectively disinfect. The advantage of embedding this information in the tag is that no engineering visits would be required to alter the dosage settings of previously installed dosing systems.

Preferably, if dosage information is embedded into both the chemical concentrate tag and the container tag, then one tag might carry an absolute dosage value, such as 50ml per litre of water, and the other might contain information on how to scale that figure up or down, such as an instruction to double the concentration, in accordance with the product application.

Embedding a tag onto the chemical concentrate may be particularly advantageous where the dosing system is a multi-dose system, capable of dispensing different chemicals each at different concentrations. This is because the dosing system may then be arranged to dispense those chemical concentrates in dependence on information on the tag on a container, to ensure only the correct chemical concentrate is dispensed into the correct container and at the correct concentration.

With such a system each concentrate may preferably come in a concentrate container, with each concentrate container having a tag for enabling the dosing system to identify the type and strength of concentrate in each container. In this way the processor may be arranged to ensure not only that the correct type of chemical concentrate is dispensed into the correct container, but also that the correct quantity is dispensed, taking into account not only the desired concentration of the solution and the volume of diluent in a container, but also the concentration of the chemical concentrate.

With any tag based system the processor may be arranged to prevent the dispensing of a chemical concentrate to an inappropriate container.

With the dosing system in accordance with the present invention there may be provided an input by which an user may select a temporary higher strength product, in response to which the processor increments the amount of concentrate dispensed in proportion to the volume of diluent detected, in order to increase the concentration of the resultant product relative to a normal concentration. This may be advantageous for the aforementioned reasons, such as if a resultant product is to be used in a refrigerated area, where it may be desirable to increase the concentration for use in such a refrigerated area, or it may be desirable if there is a specific bacterial, or other threat, whereby it may be desirable to temporarily increase the strength of the product.

Reference is made to the accompanying drawings, of which:
Figure 1 schematically illustrates a chemical dosing system**;**
Figure 2 illustrates an additional device which may be used with the chemical dosing system of Figure 1 to determine the volume of container;
Figure 3 shows an alternative device to that shown in Figure 2;
Figure 4 illustrates a modification to the apparatus of Figure 1, where a tag reader is employed to read data off a tag on a container;
Figure 5 illustrates a modification of the apparatus illustrated in Figure 1 for use with the container of a specific type as an embodiment according to the present invention;
Figure 6 illustrates how the apparatus of Figure 5 prevents the dosing system working with a container other than of the specified type;
Figure 7 illustrates a chemical dosing system similar to that illustrated in Figure 1, but for dispensing chemical concentrate into a bucket;
Figure 8 shows a modification of the chemical dosing system of Figure 7; and
Figure 9 illustrates a further modification of the chemical dosing system of Figures 7 and 8.

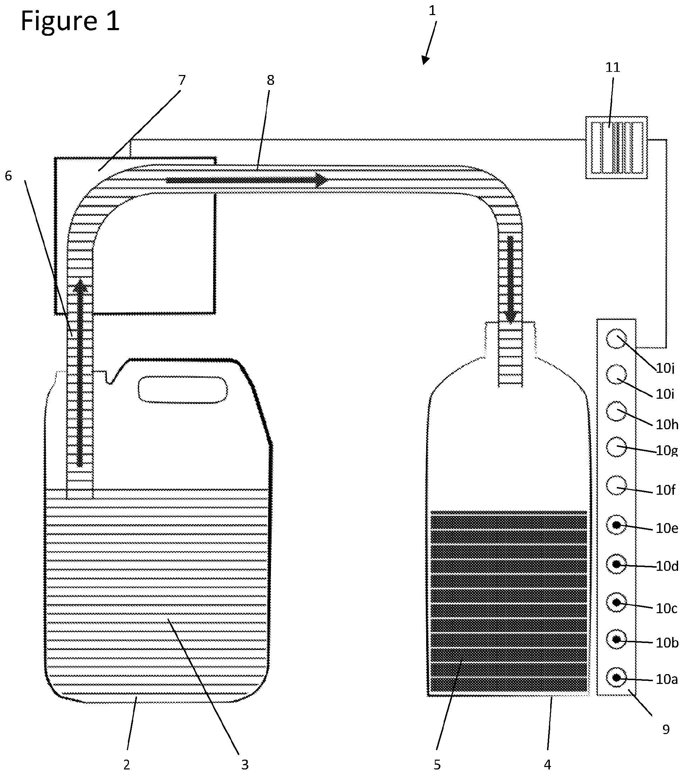

Referring now Figure 1, a chemical dosing system, indicated generally as 1, comprises a first container 2 full of a chemical concentrate 3 and a second container 4, partly filled with a diluent 5, which in this case is water. A pipe 6 extends from the first container 2 to a diaphragm pump 7, which pump 7 is controlled by a processor 11. The pump 7 is arranged to pump chemical concentrate from the pipe 6 along the pipe 8 to the second container 4, to be mixed with the diluent 5.

At the side of the second container 4 there is positioned a detector 9, which comprises a linear array of ten vertically spaced apart sensors 10a to 10j, positioned adjacent to the second container 4. Each of the sensors 10a to 10j is a non-contact capacitive sensor, the capacitive value of which changes when a conductive liquid, such as water, is in close proximity to the sensor due to the parasitic capacitance of the liquid. However alternative contactless sensors may be used, such as sensors that detect a change in the optical characteristics of the container when the level of diluent reaches a point in the container level with the sensor, or they may detect changes in the reflectance of other electromagnetic radiation, such as radar, or changes in the reflectance of sound waves, such as sonar. Whatever the sensor type, the detector provides to the processor 11 an output indicative of the level of the diluent 5 within the second container 4.

In Figure 1, the second container 4 is of a known type and thus the processor is able to determine the volume of diluent 5 in the second container 4 merely from the level of the diluent 5, as indicated by sensors 10a to 10e. In response the processor 11 causes an appropriate quantity of chemical concentrate 3 to be dispensed by operating the diaphragm pump 7 for a predetermined period of time appropriate to dispense the desired volume of chemical concentrate 3. As an alternative to the pump 7, a pressurised supply of some type could be provided, possibly via gravity, and the flow could be started and stopped by the processor 11, with a meter monitoring the quantity dispensed and the processor stopping the flow once the desired quantity had been dispensed to the second container 4.

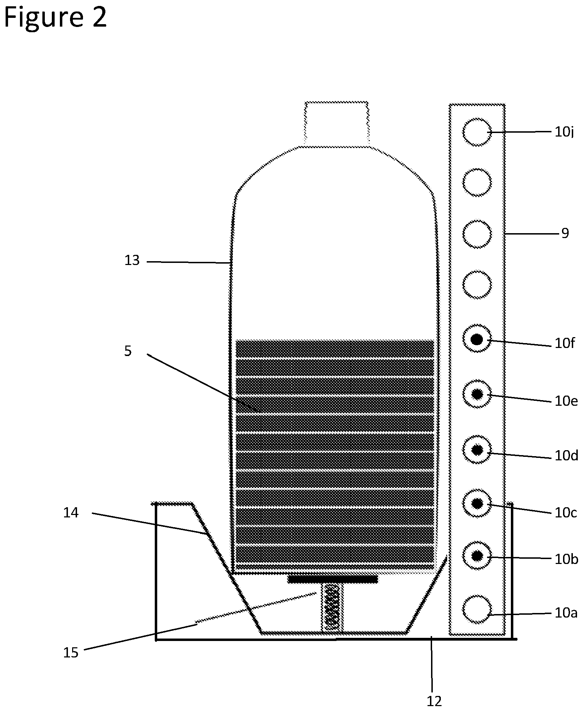

Referring now to Figure 2, here there is illustrated a modification to the apparatus of Figure 1. Here the detector 9 is housed a corner of a receptacle 12, which receptacle 12 is shaped to receive container 13. The receptacle 12 has an inner cone shaped portion 14 into which the base of the container 13 is placed. The diameter of the container 13 determines how far down the container 13 comes to rest in the cone shaped portion 14 of the receptacle and this is detected by a detector 15, which provides a signal to the processor 11 of Figure 1.

The processor 11 can thus calculate the diameter of the container 13 from the signal from the detector 15 and use this, in combination with the signal from the detector 9, to determine the volume of the diluent 5 within the container 13. It will be noted here that the processor 11 has to make an adjustment for the container 13 not extending to the bottom of the detector 9 and it is possible to make this adjustment using information from the signal from the detector 15 indicating the position of the bottom of the container 13. Thus, sensor 10a will not provide a positive signal because it is below the level of the diluent 5 in the container 13.

The example described above with reference to Figure 2 permits containers 13 having different diameters to be used with the dosing system of Figure 1.

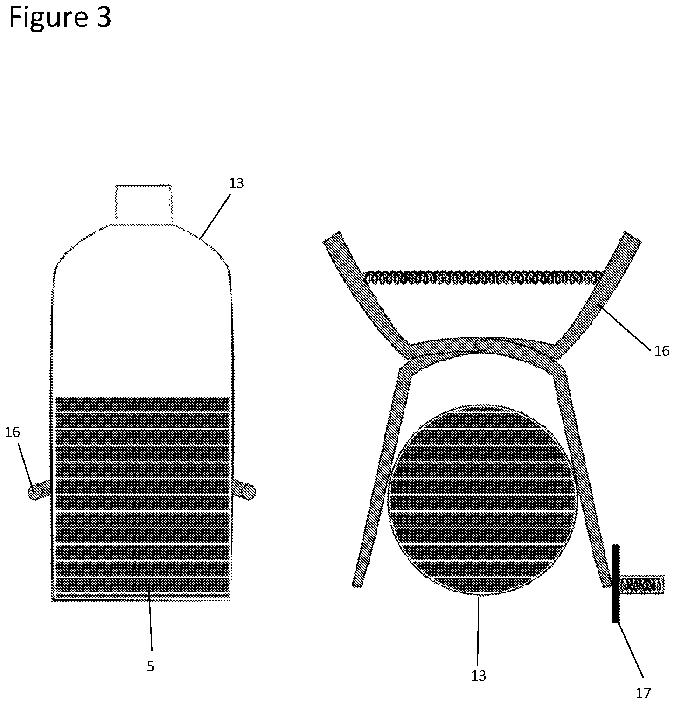

Referring now to Figure 3, here an alternative example is shown to that of Figure 2. Here a pair of spring loaded callipers 16 are arranged to receive the container 13, causing detector 17 to output a signal to the processor 11 of Figure 1 indicative of the diameter of the container 13. This thus again enables this information to be used, together with the output from the detector 9, to establish the volume of diluent 5 within the container 13.

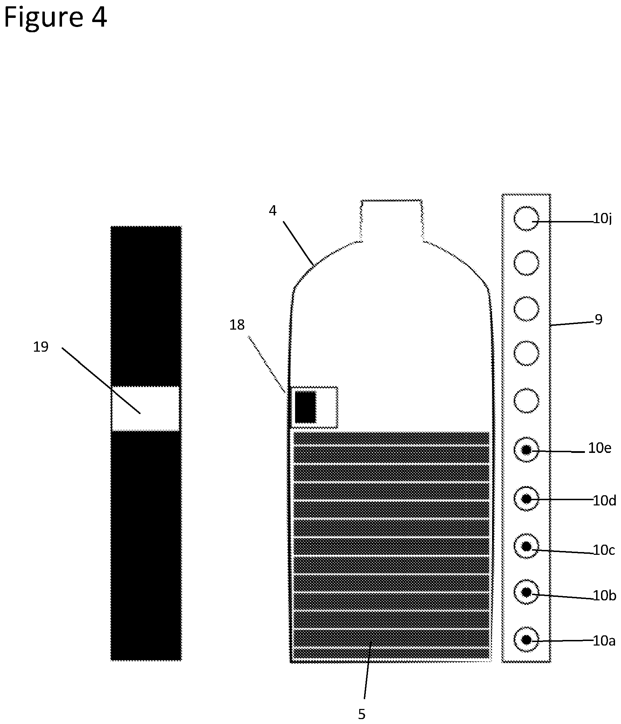

Referring now to Figure 4, in this example the second container 4 of Figure 1 is provided with a radio frequency identification device (RFID) tag 18, which is arranged to be read by a reader 19 connected to the processor 11. The tag 18 contains information including the diameter of the container 4 together with the type of chemical and the concentration of chemical to be placed within the container 4. This is read by the reader 19 and processed by the processor 11, together with the output signal from the detector 9, in order to control the diaphragm pump 7 to cause an appropriate amount of chemical concentrate to be dispensed. Although not shown, similar tags may be provided on the first container 2 of Figure 1, which may also be read by an appropriate reader, with the information on the tag on the container 2 indicating the type and concentration of the chemical concentrate 3 within the first container 2. The processor 11 may thus use this information to ensure only an appropriate chemical is dispensed to an appropriate second container 4 (providing a lock out if there is not a match between the chemical concentrate 3 in the container 2 and the type of second container 4 that is present). Although not shown, such an arrangement may be used in multi-dosing systems having multiple types of chemical concentrates for dispensing into respective different second containers 4.

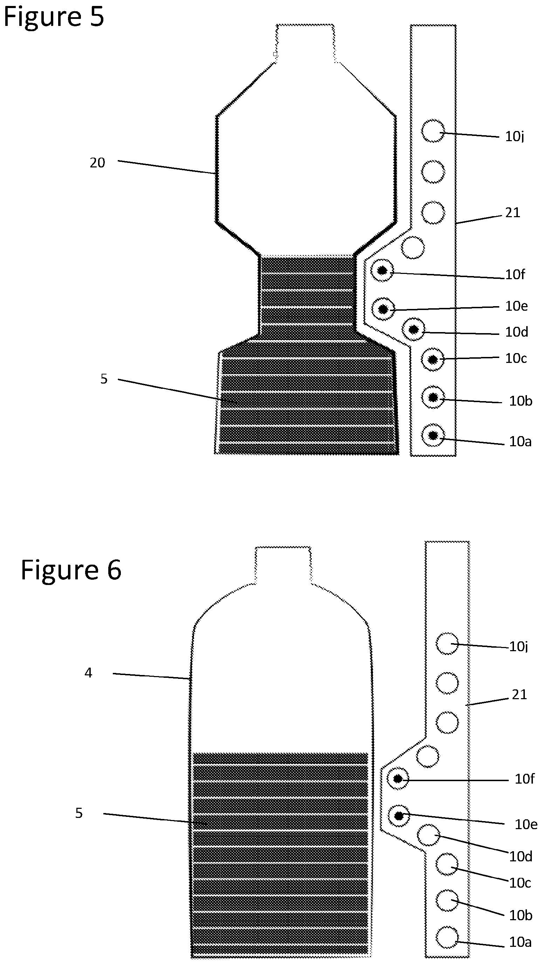

Referring now to Figure 5, here there is illustrated a container 20 which is supplied specifically for use with the chemical dosing system 1 as an embodiment according to the present invention. As can be seen from Figure 5, the container 20 has a very specific waist profile and the detector 21 has a complimentary profile, permitting all of the sensors 10a to 10j to be positioned in close proximity to the container 20 when the container is correctly positioned adjacent to the detector 21. Although in this embodiment the diameter of the container 20 varies and thus the quantity of diluent in the container is not directly proportional to the level of the diluent in the container, because the container 20 is a container specific to the chemical dosing system 1, the processor 11 is programmed to take this into account.

For comparison purposes, Figure 6 shows the same detector 21, but here a non-specific container 4 is used instead of the specific container 20 of Figure 5. Because the container 4 does not have the specific shape of the container 20 of Figure 5, only sensors 10e and 10f provide an output. In response to detecting an output from sensors 10e and 10f, but failing to detect an output from sensors 10a to 10d the processor 11 determines that the container 4 is not the correct container and prevents dispensing to the container 4.

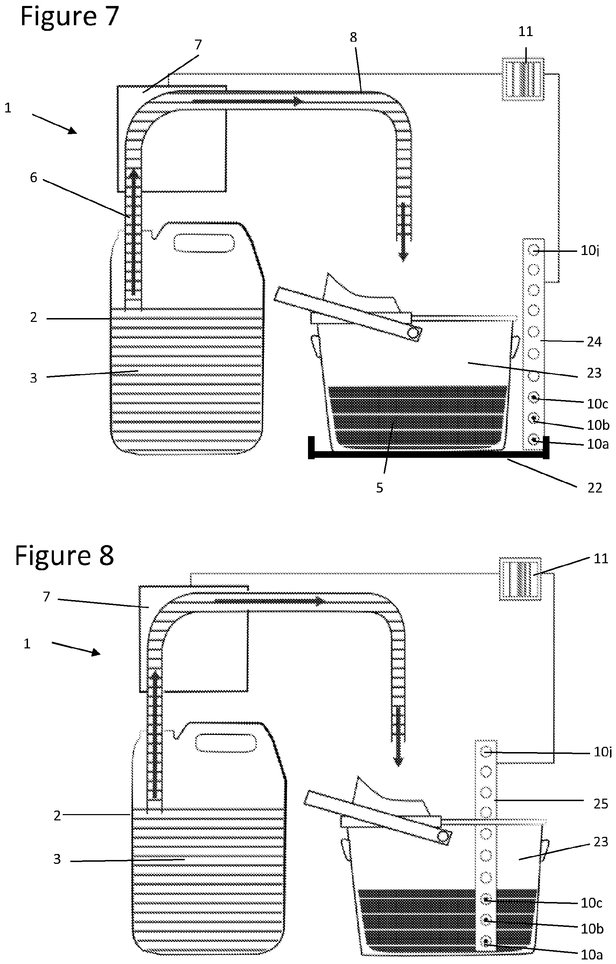

Referring now to Figure 7, here there is provided a similar arrangement to that of Figure 1 and like components have like numbers to those used in Figure 1. In Figure 7, a receptacle 22 is provided for receiving an opentopped bucket 23, with the detector 24 attached to one side of the receptacle 22. Because the receptacle 22 is floor mounted and designed for receiving a bucket 23, the processor 11, in response to detecting an output from sensors 10a to 10c knows that these should represent the level of diluent 5 in the bucket 23 and, thus the processor 11 is able to approximately calculate the volume of diluent 5 in the bucket 23.

Although not illustrated, the bucket 23 of Figure 7 may also be provided with an RFID or similar tag to that shown on the container 18 of Figure 4 and which can also be read by a reader connected to the processor 11, in the same way as the reader 19 of Figure 4 is connected to the processor 11. In this way, a tag on the bucket 23 may indicate the desired concentration of the product for the bucket and also the type of chemical concentrate that is to be dispensed into the bucket 23.

Referring now to Figure 8, here there is shown a modification to the dosing system of Figure 7. Here there is no receptacle 22 to receive the bucket 23, but instead the detector 24 is in the form of a freestanding wand 25 which is arranged to be picked up and placed within bucket 23, as shown. This has the disadvantage that the resultant product in the bucket 23 may drip off the wand 25 when the wand is removed, but it avoids the need to precisely position the relatively large and, when full, heavy bucket 23 in close proximity to the detector 24 of Figure 7.

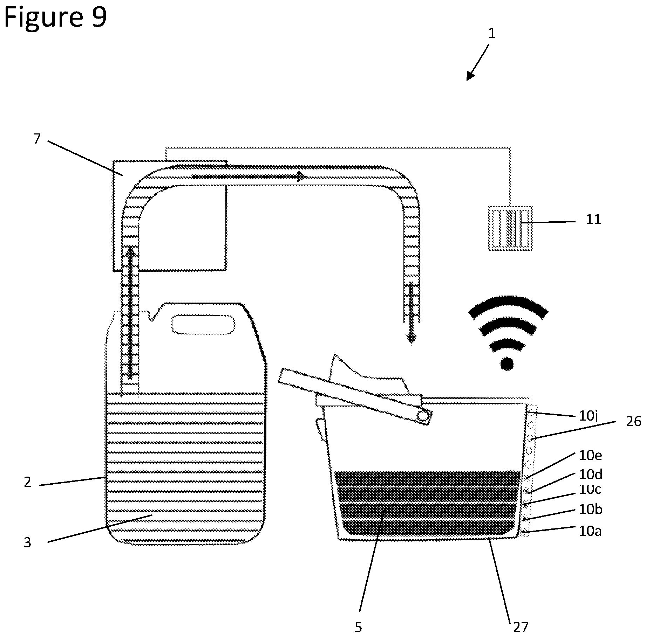

As a further alternative, there is illustrated in Figure 9 an arrangement where a detector 26 is permanently affixed to a bucket 27 and this may then wirelessly transmit to the processor 11 the volume of diluent 5 within the bucket 27, as determined by sensors 10a to 10j forming part of the detector 26. The detector 26 may also communicate to the processor 11 the type and desired concentration of the resultant product for the bucket 27.

Figure 5 provides an embodiment of how the present invention may be employed. However, it will be appreciated that many other modifications and alternative embodiments will be possible without departing from the scope of the present invention, as defined by the following claims.

## Claims

1. A chemical dosing system (1) for adding a chemical concentrate (3) to a diluent (5), the system (1) comprising:
a container (20) for holding a diluent (5) and receiving a concentrate (3);
a dispenser mechanism (7) for dispensing a quantity of concentrate (3) into the container (4);
a detector (9, 21, 24, 26) arranged to detect a level of diluent (5) in the container (4),
**characterised in that** the chemical dosing system further comprises a processor (11) arranged to control the dispenser mechanism (7) so as to dispense a known volume of concentrate (3) in dependence on an approximate volume of diluent (5) determined according to the detected level of diluent (5) in the container (20) and
the detector comprises a plurality of vertically displaced sensors (10a-10j) each arranged to detect diluent (5) at a different level within the container (20), so as to incrementally detect the level of diluent (5) in the container (20),
the chemical dosing system (1) further comprising a receptacle (12) for receiving the container (13) and maintaining it in position adjacent to the detector (9), which detector (9) is arranged to detect the quantities of diluent through the wall of the container (13),
wherein the container (20) is of a known type for use with the dosing system (1),
and wherein: the container (20) has a specific non-standard shape; and the receptacle is shaped to permit the container (20) to be accommodated in the receptacle; and some of the sensors (10a-10j) of the detector (21) are positioned such that if a conventional container without said specific shape were to be placed in the receptacle, full of diluent (5), a lowermost sensor (10a) would fail to detect the presence of the diluent (5).

2. A chemical dosing system (1) as claimed in Claim 1, wherein each of the plurality sensors (10a-10j) is connected to the processor (11) and the processor (11) requires a lower most sensor (10a) to indicate the presence of a diluent (5) at the lower level before concentrate (3) can be dispensed, even when higher sensors (10e, 10f) indicate the presence of a diluent (5).

3. A chemical dosing system (1) as claimed in any preceding claim, wherein each of the plurality of sensors (10a-10j) is a contactless sensor, the output of which is altered by the presence of a diluent (5) in close proximity to the sensor (10a-10j).

4. A chemical dosing system (1) as claimed in any preceding claim, wherein the receptacle (12) comprises means for determining a diameter of the container.

5. A chemical dosing system (1) as claimed in Claim 4, wherein the receptacle (12) has a cone shaped portion (14), or cone shaped elements arranged to receive the cylindrical base of a container (13) and a diameter portion sensor (15) arranged to generate a signal indicative of the position at which a base of the container (13) rests within the cone shaped portion (14) or cone shaped elements of the receptacle (12) and thus indicative of the diameter of the container (13).

6. A chemical dosing system (1) as claimed in Claim 4 or 5, wherein the processor (11) uses the output of the plurality of sensors (10a-10j) together with the signal indicative of the diameter of the container (13) to control the dispenser mechanism (7) to dispense an appropriate volume of concentrate (3) for the volume of diluent (5) in the container (13).

7. A chemical dosing system (1) as claimed in any preceding claim, wherein the container is the container of a trigger spray bottle.

8. A chemical dosing system (1) as claimed in any preceding claim, further comprising a tag (18) on the container (20) and a reader (19) linked to the processor (11) for reading information on the tag (18), the information on the tag (18) being indicative of a desired concentration.

9. A chemical dosing system (1) as claimed in any preceding claim, further comprising an input by which an operative can select a higher strength product, in response to which the processor (11) increments the amount of concentrate (3) dispensed in proportion to the volume of diluent (15) detected, in order to increase the concentration of the resultant product relative to a normal concentration.

## Patentansprüche

1. Ein Chemikaliendosiersystem (1) zum Zugeben eines Chemikalienkonzentrats (3) zu einem Verdünnungsmittel (5), wobei das System (1) Folgendes beinhaltet:
einen Behälter (20) zum Halten eines Verdünnungsmittels (5) und Aufnehmen eines Konzentrats (3);
einen Abgabemechanismus (7) zum Abgeben einer Menge eines Konzentrats (3) in den Behälter (4);
einen Detektor (9, 21, 24, 26), der zum Detektieren eines Niveaus des Verdünnungsmittels (5) in dem Behälter (4) eingerichtet ist,
**dadurch gekennzeichnet, dass** das Chemikaliendosiersystem ferner einen Prozessor (11) beinhaltet, der eingerichtet ist, den Abgabemechanismus (7) zu steuern, um somit ein bekanntes Volumen von Konzentrat (3) in Abhängigkeit von einem ungefähren Volumen von Verdünnungsmittel (5), das entsprechend dem detektierten Niveau des Verdünnungsmittels (5) in dem Behälter (20) bestimmt wird, abzugeben, und der Detektor eine Vielzahl von vertikal versetzten Sensoren (10a-10j) beinhaltet, die jeweils eingerichtet sind, Verdünnungsmittel (5) auf einem verschiedenen Niveau innerhalb des Behälters (20) zu detektieren, um somit das Niveau des Verdünnungsmittels (5) in dem Behälter (20) stufenweise zu detektieren,
wobei das Chemikaliendosiersystem (1) ferner ein Gefäß (12) beinhaltet, um den Behälter (13) aufzunehmen und ihn neben dem Detektor (9) in Position zu halten, wobei der Detektor (9) eingerichtet ist, die Mengen von Verdünnungsmittel durch die Wand des Behälters (13) zu detektieren,
wobei der Behälter (20) ein bekannter Typ zur Verwendung mit dem Dosiersystem (1) ist, und
wobei: der Behälter (20) eine spezifische Nicht-Standard-Gestalt aufweist; und das Gefäß so gestaltet ist, dass das Unterbringen des Behälters (20) in dem Gefäß ermöglicht wird; und einige der Sensoren (10a-10j) des Detektors (21) so positioniert sind, dass, wenn ein herkömmlicher Behälter, der voll mit Verdünnungsmittel (5) ist, ohne die genannte spezifische Gestalt in dem Gefäß platziert würde, ein unterster Sensor (10a) das Vorhandensein des Verdünnungsmittels (5) nicht detektieren könnte.

2. Chemikaliendosiersystem (1) nach Anspruch 1, wobei jeder von der Vielzahl von Sensoren (10a-10j) mit dem Prozessor (11) verbunden ist und der Prozessor (11) erfordert, dass ein unterster Sensor (10a) das Vorhandensein eines Verdünnungsmittels (5) auf dem unteren Niveau anzeigt, bevor Konzentrat (3) abgegeben werden kann, selbst wenn höhere Sensoren (10e, 10f) das Vorhandensein eines Verdünnungsmittels (5) anzeigen.

3. Chemikaliendosiersystem (1) nach einem der vorhergehenden Ansprüche, wobei jeder von der Vielzahl von Sensoren (10a-10j) ein kontaktloser Sensor ist, dessen Ausgabe durch das Vorhandensein eines Verdünnungsmittels (5) in unmittelbarer Nähe des Sensors (10a-10j) verändert wird.

4. Chemikaliendosiersystem (1) nach einem der vorhergehenden Ansprüche, wobei das Gefäß (12) Mittel zum Bestimmen eines Durchmessers des Behälters beinhaltet.

5. Chemikaliendosiersystem (1) nach Anspruch 4, wobei das Gefäß (12) Folgendes aufweist: einen kegelförmigen Anteil (14) oder kegelförmige Elemente, der oder die eingerichtet sind, die zylinderförmige Basis eines Behälters (13) aufzunehmen, und einen Durchmesseranteilsensor (15), der eingerichtet ist, ein Signal zu erzeugen, das die Position anzeigt, an der eine Basis des Behälters (13) innerhalb des kegelförmigen Anteils (14) oder der kegelförmigen Elemente des Gefäßes (12) ruht, und somit den Durchmesser des Behälters (13) anzeigt.

6. Chemikaliendosiersystem (1) nach Anspruch 4 oder 5, wobei der Prozessor (11) die Ausgabe der Vielzahl von Sensoren (10a-10j) zusammen mit dem Signal, das den Durchmesser des Behälters (13) anzeigt, verwendet, um den Abgabemechanismus (7) zu steuern, um ein für das Volumen von Verdünnungsmittel (5) in dem Behälter (13) angemessenes Volumen von Konzentrat (3) abzugeben.

7. Chemikaliendosiersystem (1) nach einem der vorhergehenden Ansprüche, wobei der Behälter der Behälter einer Sprühflasche ist.

8. Chemikaliendosiersystem (1) nach einem der vorhergehenden Ansprüche, das ferner eine Kennzeichnung (18) auf dem Behälter (20) und ein mit dem Prozessor (11) verknüpftes Lesegerät (19) zum Lesen von Informationen auf der Kennzeichnung (18) beinhaltet, wobei die Informationen auf der Kennzeichnung (18) eine gewünschte Konzentration anzeigen.

9. Chemikaliendosiersystem (1) nach einem der vorhergehenden Ansprüche, das ferner eine Eingabe beinhaltet, durch die ein Bediener ein Produkt mit höherer Stärke auswählen kann, woraufhin der Prozessor (11) die proportional zu dem detektierten Volumen von Verdünnungsmittel (15) ausgegebene Menge von Konzentrat (3) stufenweise erhöht, um die Konzentration des resultierenden Produkts relativ zu einer normalen Konzentration zu erhöhen.

## Revendications

1. Système de dosage de produits chimiques (1) pour l'ajout d'un concentré de produit chimique (3) à un diluant (5), le système (1) comprenant :
un récipient (20) pour la conservation d'un diluant (5) et la réception d'un concentré (3) ;
un mécanisme de distribution (7) pour la distribution d'une quantité de concentré (3) dans le récipient (4) ;
un détecteur (9, 21, 24, 26) agencé pour détecter un niveau de diluant (5) dans le récipient (4),
**caractérisé en ce que** le système de dosage de produits chimiques comprend en outre un processeur (11) agencé pour commander le mécanisme de distribution (7) afin de lui faire distribuer un volume connu de concentré (3) en fonction d'un volume approximatif de diluant (5) déterminé d'après un niveau détecté de diluant (5) dans le récipient (20) et
le détecteur comprend une pluralité de capteurs décalés verticalement (10a-10j) agencés chacun pour détecter le diluant (5) à un différent niveau à l'intérieur du récipient (20), de façon à détecter par incréments le niveau de diluant (5) dans le récipient (20),
le système de dosage de produits chimiques (1) comprenant en outre un réceptacle (12) destiné à recevoir le récipient (13) et à le maintenir en place de façon adjacente au détecteur (9), lequel détecteur (9) est agencé pour détecter les quantités de diluant à travers la paroi du récipient (13),
dans lequel le récipient (20) est d'un type connu destiné à une utilisation avec le système de dosage (1),
et dans lequel : le récipient (20) a une forme non standard spécifique ; et le réceptacle a une forme qui permet au récipient (20) d'être logé dans le réceptacle ; et certains des capteurs (10a-10j) du détecteur (21) sont positionnés de telle sorte que si un récipient conventionnel sans cette forme spécifique devait être placé dans le réceptacle, rempli de diluant (5), un capteur situé tout en bas (10a) ne détecterait pas la présence du diluant (5) .

2. Système de dosage de produits chimiques (1) selon la revendication 1, dans lequel chacun de la pluralité de capteurs (10a-10j) est connecté au processeur (11) et le processeur (11) a besoin qu'un capteur situé tout en bas (10a) indique la présence d'un diluant (5) au niveau inférieur avant que le concentré (3) ne puisse être distribué, même lorsque des capteurs situés plus haut (10e, 10f) indiquent la présence d'un diluant (5).

3. Système de dosage de produits chimiques (1) selon l'une quelconque des revendications précédentes, dans lequel chacun de la pluralité de capteurs (10a-10j) est un capteur sans contact, dont la sortie est modifiée par la présence d'un diluant (5) à proximité immédiate du capteur (10a-10j).

4. Système de dosage de produits chimiques (1) selon l'une quelconque des revendications précédentes, dans lequel le réceptacle (12) comprend un moyen de déterminer un diamètre du récipient.

5. Système de dosage de produits chimiques (1) selon la revendication 4, dans lequel le réceptacle (12) comporte une partie en forme de cône (14), ou des éléments en forme de cône agencés pour recevoir la base cylindrique d'un récipient (13) et un capteur pour la partie correspondant au diamètre (15) agencé de façon à générer un signal indiquant la position à laquelle une base du récipient (13) repose dans la partie en forme de cône (14) ou les éléments en forme de cône du réceptacle (12), en indiquant ainsi le diamètre du récipient (13).

6. Système de dosage de produits chimiques (1) selon la revendication 4 ou 5, dans lequel le processeur (11) utilise la sortie de la pluralité de capteurs (10a-10j) ainsi que le signal indiquant le diamètre du récipient (13) pour commander le mécanisme de distribution (7) afin de lui faire distribuer un volume approprié de concentré (3) pour le volume de diluant (5) dans le récipient (13).

7. Système de dosage de produits chimiques (1) selon l'une quelconque des revendications précédentes, dans lequel le récipient est le récipient d'un pulvérisateur à gâchette.

8. Système de dosage de produits chimiques (1) selon l'une quelconque des revendications précédentes, comprenant en outre une étiquette (18) sur le récipient (20) et un lecteur (19) lié au processeur (11) pour lire des informations figurant sur l'étiquette (18), les informations figurant sur l'étiquette (18) indiquant une concentration souhaitée.

9. Système de dosage de produits chimiques (1) selon l'une quelconque des revendications précédentes, comprenant en outre une entrée qui permet à un opérateur de sélectionner un produit plus concentré, en réponse à laquelle le processeur (11) augmente la quantité de concentré (3) distribuée proportionnellement au volume de diluant (15) détecté, afin d'augmenter la concentration du produit ainsi obtenu par rapport à une concentration normale.
